# EUROPEAN PATENT APPLICATION

(11) **EP 4 817 391 A1**
(43) Date of publication of application: **07.10.2026**
(21) Application number: 26170682.4
(22) Date of filing: 02.04.2026
(51) Int. Cl.: A01D 34/00, G08C 17/02, H04B 17/318

(54) **AUTONOMOUS OPERATION DEVICE, TERMINAL DEVICE, CONTROL METHOD, AND AUTONOMOUS OPERATION SYSTEM**

(30) Priority: 03.04.2025 CN 202510414088
(71) Applicant: Zhejiang Sunseeker Industrial Co., Ltd., Jinhua, Zhejiang 321000 (CN)
(72) Inventor: YAN, Shaobo, Jinhua, 321000 (CN)
(74) Representative: Manna, Sara

(57) **Abstract**

The present disclosure provides an autonomous operation device, a terminal device, a control method, and an autonomous operation system, and relates to the technical field of autonomous operation devices. The control method for the autonomous operation device includes: detecting a received power of a signal received via a wireless communication module, and performing mean filtering processing on the received power; and determining whether a mean filtering result satisfies a first determination condition, if so, firstly sending a safety control prompt to a user, and then, determining whether first interaction information of the user is received within a predetermined time, and if not, triggering a control limit of the wireless communication module; and otherwise, triggering a determination of whether the mean filtering result satisfies a second determination condition, and carrying out a determination process of the mean filtering result again. According to the present disclosure, a distance over which a user controls an autonomous operation device to operate is limited by the magnitude of a received power of a wireless communication module, thereby reducing the safety risk of manual control of the autonomous operation device.

## Description

### TECHNICAL FIELD

The present disclosure relates to the technical field of autonomous operation devices for mobile operations, such as intelligent lawn mowers and sweepers, and in particular, to an autonomous operation device, a terminal device, a control method, and an autonomous operation system.

### BACKGROUND

The autonomous operation devices for mobile operations are, for example, lawn mowers or sweepers. To enable the autonomous operation device to complete work tasks throughout an entire work map range, an APP may send an automatic operation control instruction to the autonomous operation device via a network, or may send a manual operation instruction to the autonomous operation device via a wireless communication module such as Bluetooth, so as to remotely control the autonomous operation device to perform operations. When the autonomous operation device automatically performs an operation, the autonomous operation device performs the operation according to a path automatically planned based on a preset condition, and triggers a preset behavior based on a sensor disposed on the autonomous operation device, so that a safety requirement can be satisfied. When the autonomous operation device such as a lawn mower is manually controlled to mow the grass, for example, the user may wirelessly and manually control the lawn mower by means of an independent dedicated remote control, and the lawn mower executes a remote control instruction of the user to start the cutter deck. However, when the remote control distance between the user and the lawn mower is greater than the distance required by a safety specification, there may be a certain safety risk when the cutter deck of the lawn mower is started.

### SUMMARY

In view of the problem in the prior art that the user's remote control of the autonomous operation device is not limited, which may cause safety risks, the present disclosure provides an autonomous operation device, a terminal device, a control method, and an autonomous operation system.

In order to achieve the above objectives, the technical solutions adopted in the present disclosure are as follows. Provided is a control method for an autonomous operation device, applied to an autonomous operation device. The autonomous operation device includes at least a first main body mechanism, a moving mechanism, a working mechanism, an energy module, an interaction module, and a first control module, where the interaction module includes a first wireless communication module disposed on the autonomous operation device, and the autonomous operation device communicates with a terminal device via the first wireless communication module; the method includes:
detecting a received power of a signal received via the first wireless communication module, and performing mean filtering processing on the received power; and
determining whether a mean filtering result satisfies a first determination condition, if so, sending a safety control prompt to the terminal device, and triggering a control limit of the first wireless communication module in response to not receiving first interaction information from the terminal device within a predetermined time period; otherwise, triggering a determination of whether the mean filtering result satisfies a second determination condition, if so, sending a safety control prompt to the terminal device, and triggering a control limit of the first wireless communication module in response to not receiving second interaction information from the terminal device within a predetermined time period; and otherwise, executing a control instruction corresponding to the second interaction information, where a criterion of the first determination condition is higher than a criterion of the second determination condition.

Further, the first determination condition is that two consecutive mean filtering results are both less than a first preset power threshold, and the second determination condition is that three consecutive mean filtering results are all less than the first preset power threshold.

Further, the first determination condition is that two consecutive mean filtering results are both less than a first preset power threshold, and the second determination condition is that two consecutive mean filtering results are both less than a second preset power threshold, where the first preset power threshold is greater than the second preset power threshold.

Further, the first preset power threshold is set based on a relationship between a received power of a received signal and a transmission-reception distance to the terminal device, where the relationship is that the received power is inversely proportional to a square of the transmission-reception distance.

Further, determining whether the mean filtering result satisfies the first determination condition further includes:
executing a control instruction sent by the terminal device via a second wireless communication module when the mean filtering result does not satisfy the first determination condition.

Further, determining whether the mean filtering result satisfies the second determination condition further includes:
executing a control instruction sent by the terminal device via a second wireless communication module when the mean filtering result does not satisfy the second determination condition.

Further, detecting the received power of the signal received via the first wireless communication module, and performing mean filtering processing on the received power includes the following steps:
detecting received powers P1, P2, ..., and Pn of signals received at times T1, T2, ..., and Tn, respectively; and
performing mean filtering processing on the received powers of the received signals within a preset filtering window.

Further, the autonomous operation device communicating with the terminal device via the first wireless communication module further includes: sending, by the terminal device as a master device, a signal to the autonomous operation device as a slave device, and receiving, by the autonomous operation device, the signal via the first wireless communication module thereon.

A specific embodiment of the present disclosure further provides a control method for a terminal device, applied to a terminal device, where the terminal device includes at least a second main body mechanism, a second control module, and a second wireless communication module; the terminal device communicates with an autonomous operation device via the second wireless communication module;
the method includes:
sending a control instruction to the autonomous operation device via the second wireless communication module, receiving a safety control prompt when a power of a sent signal satisfies a determination condition, determining whether a user interaction action is received within a predetermined time period after the safety control prompt is received, and if so, forwarding interaction information corresponding to the user interaction action to the autonomous operation device; and otherwise, starting to stop sending the control instruction to the autonomous operation device when prompt information of exceeding a control distance sent by the autonomous operation device is received,
where the determination condition is set based on a mean filtering result of the power of the sent signal and a preset power threshold.

A specific embodiment of the present disclosure further provides a control method for a terminal device, applied to a terminal device, where the terminal device includes at least a second main body mechanism, a second control module, and a Bluetooth communication module; the terminal device as a master device communicates with an autonomous operation device as a slave device via the Bluetooth communication module;
the method includes:
sending a control instruction to the autonomous operation device via the Bluetooth communication module, where prompt information of exceeding a control distance sent by the autonomous operation device is received only when a mean filtering result of a power of a sent signal is lower than a preset power threshold; and continuing to perform instruction control on the autonomous operation device when the filtering result of the power of the sent signal is greater than the preset power threshold.

A specific embodiment of the present disclosure further provides an autonomous operation device, configured to perform the control method for an autonomous operation device described above.

A specific embodiment of the present disclosure further provides a terminal device, configured to perform the control method for a terminal device described above.

A specific embodiment of the present disclosure further provides a non-transitory computer-readable storage medium having stored thereon processor-executable instructions, where the executable instructions are configured to enable a processor of an autonomous operation device to perform the control method described above.

A specific embodiment of the present disclosure further provides a computer program product, including a computer program or instructions, where the computer program or the instructions, when executed by a processor, cause the processor to perform the control method described above.

A specific embodiment of the present disclosure further provides an autonomous operation system, including the autonomous operation device and the terminal device described above, or including the non-transitory computer-readable storage medium described above.

### BRIEF DESCRIPTION OF THE DRAWINGS

FIG. 1 is a schematic flowchart of a control method for an autonomous operation device according to a first embodiment of the present disclosure;
FIG. 2 is a schematic flowchart of another control method for an autonomous operation device according to a first embodiment of the present disclosure;
FIG. 3 is a schematic structural diagram of an autonomous operation system according to a third embodiment of the present disclosure; and
FIG. 4 is a schematic structural diagram of an autonomous operation device according to a third embodiment of the present disclosure.

### DETAILED DESCRIPTION

To enable those skilled in the art to better understand the technical solutions in the present disclosure, the technical solutions in embodiments of the present disclosure will be clearly and completely described below with reference to the accompanying drawings in the embodiments of the present disclosure, so that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure. It is apparent that the described embodiments are only a part of the embodiments of the present disclosure, but not all of them. Based on the embodiments of the present disclosure, all other embodiments obtained by those of ordinary skill in the art without creative effort shall fall within the protection scope of the present disclosure.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification do not necessarily all refer to the same embodiment. In addition, the particular feature, structure, or characteristic may be combined in any manner in one or more embodiments.

As used in this specification and the appended claims, the singular forms "a/an" and "the" include plural references, unless otherwise specified clearly in the context. It should be noted that the term "or" is generally used as a meaning of "and/or", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

Implementation details of the embodiments of the present disclosure are described in detail below with reference to the accompanying drawings. The following content is merely implementation details provided for ease of understanding, and is not necessary for implementing the solutions.

### Embodiment 1

An autonomous operation device is a robot that can autonomously move within a preset working region and perform a specific operation, typically such as an intelligent sweeper/vacuum cleaner performing a cleaning operation, or an intelligent lawn mower performing a lawn mowing operation. Taking the intelligent lawn mower as an example, an application program may send a manual operation instruction to the lawn mower to remotely control the lawn mower to mow the grass. When manually controlling the lawn mower to perform mowing, for example, by using an independent dedicated remote control to manually control the lawn mower, the remote control is provided with a remote control button for "starting the cutter deck". When the machine is in a wireless manual control mode and the cutter deck of the lawn mower is remotely started, a safety specification requires that the lawn mower needs to be within 6 meters of the remote control to start the cutter deck. If the distance for remotely controlling the starting of the cutter deck of the autonomous operation device is not limited, the blindness of the user in controlling the autonomous operation device may be increased, thereby causing a safety risk when the cutter deck of the autonomous operation device is started by manual control.

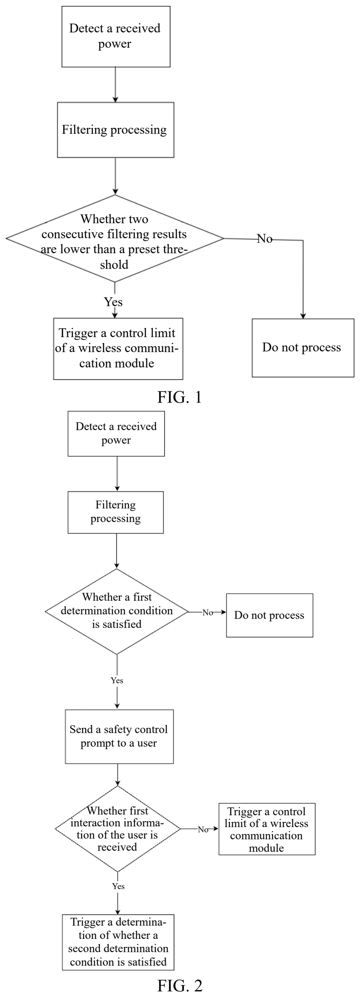

A first embodiment of the present disclosure relates to a control method for an autonomous operation device, applied to an autonomous operation device. FIG. 1 is a detailed flowchart of the control method for an autonomous operation device in this embodiment. In this embodiment, in view of the above problem that a safety risk may be caused when the user remotely controls the autonomous operation device to start the cutter deck with a remote control distance exceeding a safety regulation requirement, a control method for an autonomous operation device and an autonomous operation device are provided. By means of the magnitude of the received power of the wireless communication module, the distance over which the user controls the autonomous operation device to operate is limited, thereby reducing the blindness of the user in controlling the autonomous operation device to start the cutter deck, and further reducing the safety risk of manual control of the autonomous operation device.

The autonomous operation device detects the received power of the signal received via the wireless communication module, performs filtering processing on the received power, determines whether two consecutive filtering results are lower than a preset threshold, and if so, triggers the control limit of the wireless communication module. After the control limit of the wireless communication module is triggered, a prompt of exceeding a control distance is fed back to the terminal device.

For example, Bluetooth is used as the wireless communication module, the remote control is used as the terminal device, and 6 meters is used as a distance limit for the user to remotely control the autonomous operation device. Specifically, the remote control may be used as the master device, and the autonomous operation device may be used as the slave device. The remote control establishes a connection to the autonomous operation device by using a Bluetooth protocol for communication. The autonomous operation device receives, by means of the wireless communication module thereon, a signal sent by the remote control, determines, based on the power of the received signal, whether to execute a control instruction sent by the remote control, and then determines whether to feed back the distance limit to the remote control. In the above Bluetooth communication process, a frequency hopping technology may be used to enhance the anti-interference capability of communication, and the transmission frequency is continuously changed to reduce communication interference and improve security. In addition, the remote control may continuously monitor the value of a received signal strength indicator (RSSI) as the master device. When it is detected that the signal strength is lower than a certain critical value (such as -85 dBm, a typical Bluetooth critical value), the disconnection protection can be immediately triggered, which reduces a delay of about 200 ms to 300 ms compared with the time required when the slave device passively detects that the signal strength is lower than a certain critical value, so as to avoid continuous communication in the case of poor signal quality, thereby reducing interference and errors. In addition, the remote control will consume more power when trying to maintain a low-quality connection, and triggering the disconnection protection can enable the device to enter a low-power state and prolong the battery life. In addition, through dynamic power consumption optimization, the autonomous operation device, as a slave device, only needs to maintain basic listening power consumption. This further reduces power consumption and the possibility of interference, and ensures that the autonomous operation device can still work stably in a complex environment. The terminal device may include at least a main body mechanism, a control module, and a wireless communication module. The wireless communication module of the present disclosure includes, but is not limited to, Bluetooth; the terminal device includes, but is not limited to, a remote control, and the terminal device may also be a mobile phone, which is only a selection of preferred solutions. The communication distance of Bluetooth is generally about 10 meters, and when the limited distance for the user to remotely control the autonomous operation device is 6 meters, the Bluetooth communication distance is inconsistent with the limited distance for the remote control of the autonomous operation device. In other examples, the communication distance of the wireless communication module may also be inconsistent with the limited distance for the remote control of the autonomous operation device.

A person of ordinary skill in the art may understand that a Friis free space formula is one of the most important equations in antenna theory. It is used to calculate the power transmission of two antennas in free space. This formula relates the transmitted power, antenna gains, distance, and wavelength to the received power, and is specifically expressed as: *Pr =* (*Pt * Gt * Gr* * *λ*²)/(4*π*d)², where *Pt* is the transmit power, *Gt* is the transmit antenna gain, *Gr* is the receive antenna gain, *λ* is the wavelength, and *d* is the distance between the two antennas.

According to the Friis free space formula, the signal reception power of the receiver is approximately inversely proportional to the square of the distance *d*. Based on the relationship between the received power and the transmission-reception distance, a received power threshold is set, so that a distance threshold can be indirectly defined, and thus the distance that allows the user to control the autonomous operation device via Bluetooth can be defined. Specifically, when the received power is lower than a preset power threshold, it indicates that the distance between the user and the autonomous operation device is relatively large at this time, and the autonomous operation device refuses to execute the control instruction sent by the user via the wireless communication module, and feeds back prompt information of exceeding the control distance to the remote control via the application program APP. When the received power is higher than the preset power threshold, it indicates that the distance between the user and the autonomous operation device satisfies a distance range of safety control at this time, the control instruction sent by the user via the wireless communication module is executed, and the prompt information is not fed back to the remote control.

In some embodiments, since the wireless channel is susceptible to interference, the received signal power is prone to fluctuations, resulting in an abnormally low value of the received power. Each time it is detected that the received power is lower than the preset power threshold, the user is limited to sending the control information and is reminded by using the APP. This may cause the user to mistakenly trigger Bluetooth control limits or receive a prompt indicating excessive distance when the user is in a safe range.

In some other embodiments, in view of the problem that the received signal power is prone to fluctuations due to channel interference, it is set to perform mean filtering processing on the detected received power, so as to avoid accidental fluctuations in the received power from triggering the setting of the Bluetooth control limit and the distance prompt. Signals are received via the wireless communication module at different times *T*1, *T*2, ..., and *Tn*, corresponding received powers of the received signals are *P*1, *P2*, ..., and *Pn*, and mean filtering processing is performed on the received powers of the received signals within a preset filtering window. It can be understood that there are arrays in the preset filtering window, each array is the received power, and *d* is the length of the filtering window. The larger the value of *d*, the stronger the noise reduction effect of the filtering window, but it will introduce a greater delay.

In order to better understand the process of the control method of the present disclosure, the process of performing mean filtering on the received power of the received signal with reference to Table 1 when the value of the filtering window *d* is 4 is described in detail below, which is specifically as follows:
For example, as shown in Table 1, Table 1 shows received powers of signals at times *T*1 to *T*8, where an abnormally low value 1 occurs at time *T*3. When the filtering window *d* is set to 4, there are mean filtering results *R*1 = (*P*1 *+ P*2 *+ P*3 *+ P*4)/*d =* (5 + 5 + 1 + 5)/4 = 4 and *R*2 = (*P*2 + *P*3 + *P*4 + *P*5)/*d* = (5 + 1 + 5 + 5)/4 = 4 at times T4 and *T*5, respectively. It can be seen that the mean filtering eliminates the influence of the abnormally low value of the received power of 1 at time *T*3 on the filtering result. It can be seen that the influence of the abnormally high value or the abnormally low value can be eliminated by the mean filtering processing.

**Table 1 Received powers, filtering windows, and filtering results at different times**

| Time (T) | *T*1 | *T*2 | *T*3 | *T*4 | *T*5 | *T*6 | *T7* | *T*8 |
|---|---|---|---|---|---|---|---|---|
| Received power (P) | 5 | 5 | 1 | 5 | 5 | 3 | 2 (5) | 2 (5) |
| Filtering window (i) | 4 | 4 | 4 | 4 | 4 | 4 | 4 | 4 |
| Filtering result (R) | | | | 4 | 4 | 3.5 | 3.75 (4.5) | 3 (4.5) |

However, since the mean filtering is to summarize and average all arrays (i.e., received powers) within the filtering window, historical abnormal values may have a great influence on the mean filtering result; especially when there are multiple abnormal values within the filtering window, the filtering result may be biased towards the abnormal values.

In view of the above problems of the mean filtering, the present disclosure further sets a determination condition of the mean filtering result to weaken the influence of the historical abnormal value on the mean filtering result.

Specifically, the determination condition may be set as that the Bluetooth control limit and the distance prompt are triggered only when two (for example, R1 and R2 described above) or three consecutive mean filtering results are all lower than the preset power threshold. Since the filtering window is fixed and sliding (i.e., the length of the filtering window is fixed, and the filtering operation thereof will slide with the advance of time or sequence, which is similar to using a moving lens to observe a long scroll, in which the size of the lens remains unchanged, but as the lens moves, different parts of the painting can be seen), the mean filtering process is performed, which will discard the earliest data each time a new data is added. Therefore, the limit is triggered based on multiple consecutive abnormal results, which can reduce the influence of historical abnormal values and reflect the current state and continuous condition of the data. For example, in Table 1, the small value 3 occurs at time *T6.* Since there is an abnormally low value at historical time *T*3, values at times *T*3 and *T*6 cause the filtering result to be the small value 3.5. If the small value 2 still occurs at time *T*7, because of values at times T6 and *T*7, the filtering result is also the small value 3.75. It may be considered that the received power is continuously low due to an increase in the distance. However, if the value at time *T*7 is restored to the larger value 5 (which indicates that the smaller value 3 at time *T*6 is also an abnormal value), since the abnormal value 1 at time *T*3 is discarded and the normal value 5 at time *T*7 is added, the filtering result is restored to the larger value 4.5, so as to avoid false triggering caused by abnormal values at times *T*3 and *T*6.

Through the above setting, in the case of small probability, accidental channel interference, and received power fluctuations, after the mean filtering processing, the abnormal value is pulled back to a value close to the mean, thereby avoiding false triggering of the Bluetooth limit. This setting can reduce the problem of false triggering of the Bluetooth limit caused by abnormal received power values due to unstable wireless channels. After the user is away from the autonomous operation device, the received power at each time is low, and the filtering result is also low after the mean filtering processing, which is generally lower than the preset power threshold; the control limit can still be triggered. Alternatively, in a more complex communication environment, continuous abnormal received power values may be caused, and a case in which the Bluetooth control is mistakenly triggered may still be caused, thereby reducing user experience.

In the above method, the main determination conditions include whether a preset power threshold for triggering the Bluetooth limit is satisfied, whether the number of filtering results lower than the preset power threshold is satisfied, whether the selection of the filtering window is appropriate, and the like. Different determining conditions can be set to limit the distance of Bluetooth control and the sensitivity of Bluetooth limit triggering.

In view of the above problems, further, a first determination condition and a second determination condition are set, where the first determination condition is a sensitive or more restrictive Bluetooth limit determination condition, and the second determination condition is a more fault-tolerant or less restrictive Bluetooth limit determination condition; moreover, in response to user interaction information, the determination condition is switched from the first determination condition to the second determination condition.

Specifically, as shown in FIG. 2, the autonomous operation device detects the received power of a signal received via a wireless communication module and performs mean filtering processing on the received power; determines whether the mean filtering processing satisfies a first determination condition and sends a safety control prompt to the terminal device if so; and then monitors whether interaction information fed back by the terminal device is received within a predetermined time period, triggers a Bluetooth control limit if not, and triggers a determination of whether a mean filtering result satisfies a second determination condition if so. For example, when a safety control prompt is sent to the user, buttons labeled "confirm safe operation" and "end Bluetooth control" are further provided for the user via an APP interface. The user interaction information is an instruction that the user clicks the button "confirm safe operation" displayed on the APP interface. For the terminal device, the terminal device sends a control instruction to the autonomous operation device via the wireless communication module thereon. When the power of the sent signal satisfies the first determination condition, the terminal device receives the safety control prompt, and determines whether a user interaction action is received within a predetermined time period after the safety control prompt is received. If not, the terminal device starts to stop sending the control instruction to the autonomous operation device upon receiving the prompt information of exceeding the control distance sent by the autonomous operation device; otherwise, the terminal device forwards the interaction information corresponding to the user interaction action to the autonomous operation device. In addition, when the power of the sent signal satisfies the second determination condition, the terminal device receives the safety control prompt, and determines whether a user interaction action is received within a predetermined time period after the safety control prompt is received. If so, the terminal device forwards the interaction information corresponding to the user interaction action to the autonomous operation device; otherwise, the terminal device starts to stop sending the control instruction to the autonomous operation device upon receiving the prompt information of exceeding the control distance sent by the autonomous operation device.

For example, the first determination condition may be that two consecutive mean filtering results are both less than a first preset power threshold, and the second determination condition is that three consecutive mean filtering results are all less than the first preset power threshold. The second determination condition measures more detection data, and although the sensitivity to detecting the decrease in the received power due to increased distance is reduced, it exhibits better fault tolerance and improves the user experience.

For example, the first determination condition may be that two consecutive mean filtering results are both less than a first preset power threshold, and the second determination condition is that two consecutive mean filtering results are both less than a second preset power threshold, where the first preset power threshold is greater than the second preset power threshold. Since the second preset power threshold is lower than the first preset power threshold, when the distance between the autonomous operation device and the terminal device is relatively long and the received power value is relatively low, the triggering of the control limit of the wireless communication module can be reduced. Specifically, the received power of the signal of the wireless communication module is acquired in real time and stored in the array A; when the data in the array A satisfies a preset number (the preset number here is the value of the preset filtering window, and *d* = 4 in this embodiment), the mean of the data in the array A is calculated, and the mean is stored in the array B; when the number of data in the array B satisfies a preset number, it is determined whether the data in the array B satisfies the first determination condition, and if so, the user is prompted; if the user does not process this, the autonomous operation device triggers a determination of whether the data in the array B satisfies the second determination condition; the determination is repeated according to the above steps, and if the condition is not satisfied, the Bluetooth control limit is triggered. Preferably, the application program acquires the Bluetooth signal value of the machine in real time and stores the value into an array A; when there are four pieces of data in the array A, the mean of the four pieces of data is calculated, and the mean is put into an array B; when the number of data in the array B satisfies two, it is determined whether two consecutive pieces of data in the array B are both less than -59 dB (the first preset power threshold set in this example), and if so, the user will be prompted; if the user ignores this prompt, the threshold is set to -70 dB (the second preset power threshold set in this example), and according to the above steps, when it is determined again that the Bluetooth signal value does not satisfy the condition, a second interception is performed.

In this embodiment, the distance over which the user controls the autonomous operation device to operate is limited based on whether the mean filtering result of the received power of the wireless communication module satisfies the determination condition, so as to reduce the safety risk associated with the user controlling the autonomous operation device from a long distance.

### Embodiment 2

This embodiment relates to an autonomous operation device, configured to perform the control method for an autonomous operation device in Embodiment 1. Since Embodiment 2 and Embodiment 1 correspond to each other, Embodiment 2 may be implemented in conjunction with Embodiment 1. The relevant technical details described in Embodiment 1 remain valid for this embodiment, and the technical effects achieved in Embodiment 1 are equally achievable in this embodiment. For the sake of brevity, redundant descriptions are omitted here.

### Embodiment 3

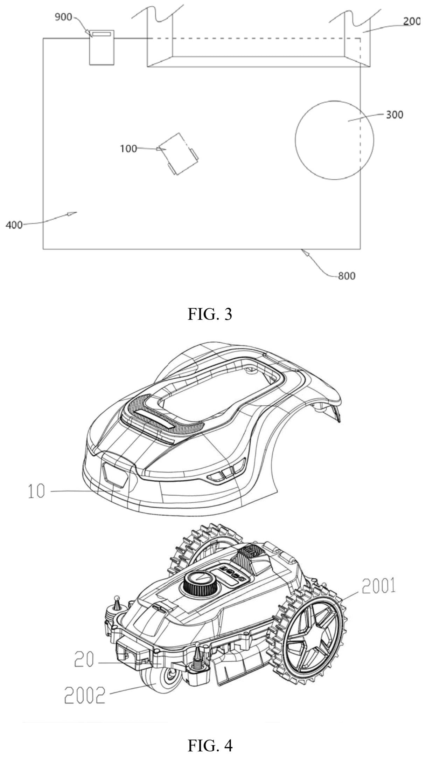

As shown in FIG. 3, this embodiment provides an autonomous operation system including an autonomous operation device 100, a docking station 900, and a boundary 800.

The autonomous operation device 100 is, in particular, a robot that can autonomously move within a preset region and perform a specific operation, typically such as an intelligent sweeper/vacuum cleaner performing a cleaning operation, or an intelligent lawn mower performing a lawn mowing operation. The specific operation particularly refers to an operation for processing a work surface and changing the state of the work surface. The present disclosure is described in detail by taking an intelligent lawn mower as an example. The autonomous operation device 100 can autonomously walk on the surface of a working region 400, and in particular, as an intelligent lawn mower, can autonomously perform a lawn mowing operation on the ground. The autonomous operation device 100 includes at least a main body mechanism, a moving mechanism, a working mechanism, an energy module, a detection module, an interaction module, a control module, and the like.

As shown in FIG. 4, the main body mechanism typically includes a chassis 20. The chassis 20 is configured to install and accommodate functional mechanisms and functional modules, such as the moving mechanism, the working mechanism, the energy module, the detection module, the interaction module, and the control module. Typically, the chassis 20 includes an upper chassis cover and a lower chassis cover. The upper chassis cover and the lower chassis cover are snap-fitted to form a sealed cavity for accommodating functional mechanisms and functional modules with waterproof and/or dustproof requirements. In some embodiments, the main body mechanism further includes a housing 10. The housing 10 is typically configured to at least partially cover the chassis 20, primarily to enhance the aesthetics and recognizability of the autonomous operation device 100. In this embodiment, the housing 10 is configured to be capable of resettable translation and/or rotation relative to the chassis 20 under an external force. In cooperation with a suitable detection module, such as a Hall sensor, the housing can further serve to detect events like collisions and lifting. In this embodiment, the upper chassis cover and the housing 10 are the same structural member.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. In this embodiment, the moving mechanism is a wheeled moving mechanism, including at least one driving wheel 2001 and at least one walking prime mover. The walking prime mover is preferably a motor, and in other embodiments, the walking prime mover may be an internal combustion engine or a machine that uses other types of energy sources to generate power. In this embodiment, a left driving wheel 2001, a left walking prime mover that drives the left driving wheel, a right driving wheel 2001, and a right walking prime mover that drives the right driving wheel are preferably provided. In this embodiment, the straight-line movement of the autonomous operation device 100 is achieved by the equidirectional and constant-speed rotation of the left and right driving wheels 2001, and the steering movement is achieved by the equidirectional and differential-speed rotation or the opposite-direction rotation of the left and right driving wheels 2001. In other embodiments, the moving mechanism may further include a steering mechanism independent of the driving wheels and a steering prime mover independent of the walking prime mover. In this embodiment, the moving mechanism further includes at least one driven wheel 2002, typically configured as a universal wheel, and the driving wheel 2001 and the driven wheel 2002 are respectively located at the front and rear ends of the autonomous operation device 100.

The working mechanism is configured for performing a specific operation task and includes a working member and a working prime mover that drives the working member to operate. For example, for an intelligent sweeper/vacuum cleaner, the working member includes a roller brush, a dust suction pipe, a dust collection chamber, and the like. For an intelligent lawn mower, the working member includes a cutting blade or a cutting deck, and further includes other components for optimizing or adjusting a mowing effect, such as a height adjustment mechanism for adjusting a mowing height. The working prime mover is preferably a motor, and in other embodiments, the working prime mover may be an internal combustion engine or a machine that uses other types of energy sources to generate power. In some other embodiments, the working prime mover and the walking prime mover are configured as the same prime mover.

The energy module is configured to provide energy for various work of the autonomous operation device 100. In this embodiment, the energy module includes a battery and a charging connection structure, where the battery is preferably a rechargeable battery; the charging connection structure is preferably a charging electrode that may be exposed outside the autonomous operation device 100.

The detection module is configured as at least one sensor that senses an environmental parameter or a working parameter of the autonomous operation device 100. Typically, the detection module may include sensors related to the definition of the working region 400, for example, various types of sensors such as a magnetic induction sensor, a collision sensor, an ultrasonic sensor, an infrared sensor, a radio sensor, and the like. The types of the sensors are adapted to the position and number of corresponding signal generation apparatuses. The detection module may further include positioning navigation-related sensors such as GPS positioning apparatuses, laser positioning apparatuses, electronic compasses, acceleration sensors, odometers, angle sensors, and geomagnetic sensors. The detection module may further include sensors related to its own working safety, such as an obstacle sensor, a lifting sensor, and a battery pack temperature sensor. The detection module may further include sensors related to an external environment, such as an ambient temperature sensor, an ambient humidity sensor, a light sensor, and a rain sensor.

The interaction module is configured at least to receive control instruction information inputted by a user, transmit information requiring user perception, and communicate with other systems or devices to transmit and receive information. In this embodiment, the interaction module includes an input apparatus disposed on the autonomous operation device 100 for receiving control instruction information inputted by a user, typically such as a control panel and an emergency stop key. The interaction module further includes a display screen, an indicator light, and/or a buzzer disposed on the autonomous operation device 100, enabling a user to perceive information through light or sound. In other embodiments, the interaction module includes a communication module disposed on the autonomous operation device 100 and a terminal device independent of the autonomous operation device 100, such as a mobile phone, a computer, or a network server. User control instruction information or other information may be inputted on the terminal device and reach the autonomous operation device 100 via a wired or wireless communication module. The control module typically includes at least one processor and at least one nonvolatile memory. The memory stores a pre-written computer program or an instruction set, and the processor, according to the computer program or the instruction set, controls the performance of movements, work, and the like of the autonomous operation device 100. Further, the control module can also control and adjust the corresponding actions of the autonomous operation device 100 and modify parameters in the memory based on a signal of the detection module and/or a user control instruction.

The boundary 800 is configured to define the working region 400 of the robotic system and typically includes an outer boundary. In some embodiments, the boundary 800 further includes an inner boundary. The autonomous operation device 100 is limited to move and work within the outer boundary, outside the inner boundary, or between the outer boundary and the inner boundary. The boundary 800 may be solid, typically such as a wall, fence, or railing; the boundary 800 may also be virtual, typically such as a virtual boundary signal issued by a boundary signal generation apparatus, which is usually an electromagnetic signal or an optical signal, or a virtual boundary set in an electronic map, for example formed by two-dimensional or three-dimensional coordinates, for an autonomous operation device 100 provided with a positioning apparatus (such as a satellite positioning apparatus, a vision-based positioning apparatus, or a LiDAR positioning apparatus). In some embodiments, the boundary 800 is configured as a closed conductive wire that is electrically connected to the boundary signal generation apparatus, which is typically disposed in the docking station 900. In some embodiments, the autonomous operation device 100 is provided with a visual module capable of distinguishing the boundary between the grass and the non-grass (such as the house 200 and the tree 300 shown in FIG. 3), and the boundary 800 of the working region 400 is determined via the visual module.

The docking station 900 is usually configured on the boundary 800 or in the boundary 800 for the autonomous operation device 100 to park, and is particularly capable of supplying energy to the autonomous operation device 100 parked at the docking station 900.

Optionally, the processor connects all parts in the entire autonomous operation device by using various interfaces and lines, and performs various functions of the autonomous operation device and processes data by running or executing an instruction, a program, a code set, or an instruction set stored in the memory and invoking data stored in the memory. Optionally, the processor may be implemented in at least one hardware form of digital signal processing (DSP), a field programmable gate array (FPGA), or a programmable logic array (PLA). The processor may be integrated with one or a combination of a central processing unit (CPU), a graphics processing unit (GPU), and a neural-network processing unit (NPU). The CPU mainly processes an operating system, a user interface, an application program, and the like. The GPU is configured to render and draw content that needs to be displayed on the touch display screen. The NPU is configured to implement an artificial intelligence (AI) function.

The memory may include a random access memory (RAM), or may include a read only memory (ROM). Optionally, the memory includes a non-transitory computer-readable storage medium. The memory may be configured to store instructions, programs, code, code sets, or instruction sets. The memory may include a program storage area and a data storage area. The program storage area may store instructions for implementing an operating system, instructions for at least one function, instructions for implementing the above method embodiments, or the like; and the data storage area may store data created based on the use of the autonomous operation device, or the like.

The present disclosure further provides a non-transitory computer-readable storage medium storing a computer program, where the computer program, when run by a processor, causes the processor to perform the control method for an autonomous operation device according to the above embodiments.

Although the present disclosure has been described in detail with reference to the accompanying drawings and in conjunction with the preferred embodiments, the present disclosure is not limited thereto. Those of ordinary skill in the art can make various equivalent modifications or replacements to the embodiments of the present disclosure without departing from the spirit and essence of the present disclosure, and these modifications or replacements shall fall within the scope of the present disclosure. Or any variation or replacement that can be easily conceived by a person skilled in the art within the technical scope disclosed in the present disclosure shall fall within the protection scope of the present disclosure. Therefore, the protection scope of the present disclosure shall be subject to the protection scope of the claims.

## Claims

1. A control method for an autonomous operation device, applied to an autonomous operation device, wherein the autonomous operation device comprises at least a first main body mechanism, a moving mechanism, a working mechanism, an energy module, an interaction module, and a first control module, wherein the interaction module comprises a first wireless communication module disposed on the autonomous operation device, and the autonomous operation device communicates with a terminal device via the first wireless communication module;
the method comprises:
detecting a received power of a signal received via the first wireless communication module, and performing mean filtering processing on the received power; and
determining whether a mean filtering result satisfies a first determination condition, if so, sending a safety control prompt to the terminal device, and triggering a control limit of the first wireless communication module in response to not receiving first interaction information from the terminal device within a predetermined time period; otherwise, triggering a determination of whether the mean filtering result satisfies a second determination condition, if so, sending a safety control prompt to the terminal device, and triggering a control limit of the first wireless communication module in response to not receiving second interaction information from the terminal device within a predetermined time period; and otherwise, executing a control instruction corresponding to the second interaction information, wherein a criterion of the first determination condition is higher than a criterion of the second determination condition.

2. The method according to claim 1, wherein the first determination condition is that two consecutive mean filtering results are both less than a first preset power threshold, and the second determination condition is that three consecutive mean filtering results are all less than the first preset power threshold.

3. The method according to claim 1, wherein the first determination condition is that two consecutive mean filtering results are both less than a first preset power threshold, and the second determination condition is that two consecutive mean filtering results are both less than a second preset power threshold, wherein the first preset power threshold is greater than the second preset power threshold.

4. The method according to claim 2 or 3, wherein the first preset power threshold is set based on a relationship between a received power of a received signal and a transmission-reception distance to the terminal device, wherein the relationship is that the received power is inversely proportional to a square of the transmission-reception distance.

5. The method according to claim 2 or 3, wherein determining whether the mean filtering result satisfies the first determination condition further comprises:
executing a control instruction sent by the terminal device via a second wireless communication module when the mean filtering result does not satisfy the first determination condition.

6. The method according to claim 2 or 3, wherein determining whether the mean filtering result satisfies the second determination condition further comprises:
executing a control instruction sent by the terminal device via a second wireless communication module when the mean filtering result does not satisfy the second determination condition.

7. The method according to claim 1, wherein detecting the received power of the signal received via the first wireless communication module, and performing mean filtering processing on the received power comprises the following steps:
detecting received powers *P*1*, P*2, ..., and *Pn* of signals received at times *T*1, *T2,* ..., and *Tn*, respectively; and
performing mean filtering processing on the received powers of the received signals within a preset filtering window.

8. The method according to claim 1, wherein the autonomous operation device communicating with the terminal device via the first wireless communication module further comprises: sending, by the terminal device as a master device, a signal to the autonomous operation device as a slave device, and receiving, by the autonomous operation device, the signal via the first wireless communication module thereon.

9. A control method for a terminal device, applied to a terminal device, wherein the terminal device comprises at least a second main body mechanism, a second control module, and a second wireless communication module; the terminal device communicates with an autonomous operation device via the second wireless communication module;
the method comprises:
sending a control instruction to the autonomous operation device via the second wireless communication module, receiving a safety control prompt when a power of a sent signal satisfies a determination condition, determining whether a user interaction action is received within a predetermined time period after the safety control prompt is received, and if so, forwarding interaction information corresponding to the user interaction action to the autonomous operation device; and otherwise, starting to stop sending the control instruction to the autonomous operation device when prompt information of exceeding a control distance sent by the autonomous operation device is received,
wherein the determination condition is set based on a mean filtering result of the power of the sent signal and a preset power threshold.

10. A control method for a terminal device, applied to a terminal device, wherein the terminal device comprises at least a second main body mechanism, a second control module, and a Bluetooth communication module; the terminal device as a master device communicates with an autonomous operation device as a slave device via the Bluetooth communication module;
the method comprises:
sending a control instruction to the autonomous operation device via the Bluetooth communication module, wherein prompt information of exceeding a control distance sent by the autonomous operation device is received only when a mean filtering result of a power of a sent signal is lower than a preset power threshold; and continuing to perform instruction control on the autonomous operation device when the filtering result of the power of the sent signal is greater than the preset power threshold.

11. An autonomous operation device, configured to perform the control method for an autonomous operation device according to any one of claims 1 to 8.

12. A terminal device, configured to perform the control method for a terminal device according to claim 9 or 10.

13. A non-transitory computer-readable storage medium having stored thereon processor-executable instructions, wherein the executable instructions are configured to enable a processor of an autonomous operation device to perform the control method according to any one of claims 1 to 8.

14. A computer program product, comprising a computer program or instructions, wherein the computer program or instructions, when executed by a processor, cause the processor to perform the control method according to any one of claims 1 to 8.

15. An autonomous operation system, comprising the autonomous operation device according to claim 11 and the terminal device according to claim 12, or comprising the non-transitory computer-readable storage medium according to claim 13.
